# EUROPEAN PATENT SPECIFICATION

(11) **EP 1 956 669 B1**
(45) Date of publication and mention of the grant of the patent: **15.12.2010**
(21) Application number: 06821834.6
(22) Date of filing: 11.10.2006
(51) Int. Cl.: H01M 8/02, H01M 8/10

(54) **MEMBRANE ELECTRODE JOINT PRODUCT AND SOLID POLYMER ELECTROLYTE FUEL BATTERY**
MEMBRANELEKTROLYT UND VERBINDUNGSPRODUKT UND FESTPOLYMER-ELEKTROLYT-BRENNSTOFFBATTERIE
PRODUIT DE JONCTION D ÉLECTRODE À MEMBRANE ET BATTERIE À PILE ÉLECTROLYTIQUE POLYMÈRE SOLIDE

(30) Priority: 14.10.2005 JP 2005300733
(43) Date of publication of application: 13.08.2008
(73) Proprietor: JAPAN GORE-TEX, INC., Setagaya-ku Tokyo 156-8505 (JP)
(72) Inventor: SUZUKI, Youichi, Tokyo 156-8505 (JP); FUJIMOTO, Hiroyoshi, Tokyo 156-8505 (JP)
(74) Representative: Shanks, Andrew
(86) International application number: PCT/JP2006/320337
(87) International publication number: WO 2007/043587

(56) References cited:
- EP-A- 1 403 949
- JP-A- 05 021 077
- JP-A- 05 242 897
- JP-A- 07 065 847
- JP-A- 08 045 517
- JP-A- 08 078 028
- JP-A- 08 148 170
- JP-A- 08 259 710
- JP-A- 09 167 623
- JP-A- 09 199 145
- JP-A- 2003 132 913
- JP-A- 2005 243 622

## Description

### TECHNICAL FIELD

The present invention relates to a membrane electrode assembly that is configured into a solid polymer electrolyte fuel cell, and a solid polymer electrolyte fuel cell having the membrane electrode assembly.

### BACKGROUND ART

A fuel cell generates power and heat at the same time by making fuel gas having hydrogen as a main component electrochemically react with an oxidant gas such as air. A fuel cell has drawn attention as a generator system that does not generate carbon dioxide, and various types of fuel cell have been developed. Among those, a fuel cell that uses a polymer electrolyte membrane (hereinafter, referred to as "a solid polymer electrolyte fuel cell") has excellent starting properties. Further, the fuel cell can be made in small size because it has a higher output density as compared with other fuel cells. Therefore, broad applications are expected as a power source in an electric automobile, a household, and the like.

The solid polymer electrolyte fuel cell has a polymer electrolyte membrane that selectively transmits protons and a pair of catalytic electrodes formed on both sides of the polymer electrolyte membrane as one of its constituent elements. The above-described catalytic electrode has a carbon powder that carries a platinum-based metal catalyst as a main component, and includes a catalytic layer formed on both sides of the polymer electrolyte membrane and a gas diffusing layer formed on the outer side of the above-described catalytic layer having both air permeability and electron conductivity. A unit configured from these polymer electrolyte membrane and catalytic electrodes is called as a membrane electrode assembly.

Further, a gas sealing member or a gasket are provided on the circumference of the electrodes so that they sandwich the polymer electrolyte membrane and the supplied fuel gas and oxidant gas do not leak outside of the cell or mix together. Furthermore, a conductive separator plate that mechanically fixes these constituent elements, and at the same time, connects the adjacent membrane electrode assemblies to each other in series, is located on the outside. This separator plate has a gas flow passage to supply reaction gas to the surface of the electrodes and to remove produced gas and excess gas. The gas flow passage can be provided separately from the separator plate. However, a method of making the gas flow passage by providing a notch on the surface of the separator plate is common.

It is necessary for the gasket of the polymer electrolytic fuel cell to have high dimensional accuracy, sufficient elasticity, and a sufficient exposed thread, since the gasket performs gas sealing while performing connection of the separator plate and the electrodes. Accordingly, a sheet like gasket made of a resign, a rubber, and the like, and an O-ring made of a rubber have been conventionally used.

For example, in Japanese Unexamined Patent Publication No. 2004-303723, is disclosed a polymer electrolyte fuel cell in which a gas sealing member is in contact with an electrolyte membrane part sticking out in a frame shape from the electrode part. The air electrode side of this gas sealing member is flatly in contact with the electrolyte membrane, and on the other hand, the fuel electrode side constitutes a rib and is in contact linearly. When this polymer electrolyte fuel cell is assembled with such configuration, this gas sealing member is closely brought into contact with the electrolyte membrane, and air tightness is

increased by applying pressure.

However, the gas sealing member is configured with a resin film made of polyimide, and the like, an adhesive layer and a rubber layer, and there are a large number of components. Therefore, since the assembly is difficult to be built up and a gap is easily generated between the parts, there is a risk of gas leakage, and the like, due to poor assembly. Further, since one of the gas sealing members in Japanese Unexamined Patent Publication No. 2004-303723 is a rib, a local force is applied to the electrolyte membrane when a pressure is applied to decrease the gas leakage. In recent years, it has been attempted to make the electrolyte membrane thinner in order to further improve power generation efficiency. However, there is a risk that the electrolyte membrane is damaged when a local force is applied on a thin electrolyte membrane.

On the other hand, a membrane electrode assembly for a polymer electrolyte fuel cell having an ability of being assembled robustly with a reduced number of components is disclosed in Japanese Unexamined Patent Publication No. 8-45517. With this technique, the mechanical strength can be enhanced even in the case of using the electrolyte membrane that is made thinner. Specifically, a five-layer including an electrolyte membrane, two electrodes, and two diffusing layers is unified by sandwiching with sealing members made of a hard polymer such as a rubbery elastic body or polyimide.

Further, in Japanese Unexamined Patent Publication No. 6-333582, is disclosed a technique of providing a spacer made of a special metal, a thermosetting resin, or a thermoplastic resin having heat resistance between a gas sealing member and electrodes in order to prevent deformation (creep) due to a continuous application of gas pressure to the electrolyte membrane in a solid polymer electrolyte fuel cell. The thickness of this spacer is set to be thinner than the thickness of each electrode, and it protects the electrolyte membrane from pressure given to the electrolyte membrane via the electrodes.

A similar assembly is disclosed by EP 1403 949 A.

### DISCLOSURE OF THE INVENTION

As described above, a member for gas-sealing the electrolyte membrane of a solid polymer electrolyte fuel cell that has been attempted to be made thinner in recent years is preferably one that flatly contacts with the electrolyte membrane also from a viewpoint of improvement of strength. Such a gas sealing member has also an action as a reinforcing member of the electrolyte membrane. In this case, the material of the gas sealing member is preferably a resin because a material such as a rubber having high elongation is inferior in the aspect of reinforcing property of the electrolyte membrane and adhesiveness with the electrolyte membrane. Among these, a thermosetting resin that has excellent strength is preferable.

However, according to the knowledge by the present inventors, it was found that the polymer electrolyte membrane deforms when a thermosetting resin film is bonded to the electrolyte membrane used in the solid polymer electrolyte fuel cell by thermocompression.

The problem that the present invention has to solve is to provide a membrane electrode assembly having a member which has an excellent gas sealing property, also can improve the strength of the electrolyte membrane, does not cause deterioration of the polymer electrolyte membrane, and is easy to be built up since the number of components is small; and a solid polymer electrolyte fuel cell having the membrane electrode assembly.

In order to solve the above-described problem, the present inventors proceeded with research on the cause of the deterioration of the electrolyte membrane when the electrolyte membrane of the solid polymer electrolyte fuel cell is gas-sealed and reinforced with a thermosetting resin sheet. As a result, it was discovered that the cause of such deterioration is heat when the thermosetting resin sheet of a B stage is bonded to the electrolyte membrane by thermocompression and further is thermally hardened and a component of the thermosetting resin such as a main agent and a hardening agent act in cooperation. Then, it was found that the gas sealing property can be improved and the deterioration of the electrolyte membrane can be suppressed when a protective layer that prevents contact of the electrolyte membrane with the thermosetting resin is located between the electrolyte membrane and the thermosetting resin sheet, and the present invention is completed.

The membrane electrode assembly for a solid polymer electrolyte fuel cell of the present invention is characterized in:
comprising a polymer electrolyte membrane, a fuel electrode layer and an air electrode layer located respectively on each surface of the membrane, and a fuel electrode diffusing layer and an air electrode diffusing layer located respectively on the fuel electrode layer and the air electrode layer;
wherein an area of a planer section of the polymer electrolyte membrane is slightly larger than areas of planer sections of the fuel electrode layer and the air electrode layer;
a reinforcing frame formed of a thermosetting resin is located on a part of the polymer electrolyte membrane where the fuel electrode layer or the air electrode layer is not formed on one side or both sides thereof; and
a protective later exists in at least a part between the polymer electrolyte membrane and the reinforcing frame.

As the above-described reinforcing frame, the reinforcing frame which is fiber-reinforced is preferable. Since such a reinforcing frame has high strength, as a result, the strength of the membrane electrode assembly can be increased, and its handling becomes easy.

In the above-described membrane electrode assembly, the thermosetting resin configuring the reinforcing frame is preferably intruded and hardened in at least one part of a periphery of the fuel electrode diffusing layer and/or the air electrode diffusing layer. This is because such a membrane electrode assembly has an excellent gas sealing property.

In the above-described membrane electrode assembly, at least outside of the planer section of the reinforcing frame, which is the planer section on the side contacting with a gasket, is preferably smoothing-treated. This is because such a membrane electrode assembly has excellent adhesiveness with the gasket.

The solid polymer electrolyte fuel cell of the present invention has the above-described membrane electrode assembly.

Handling of the membrane electrode assembly of the present invention is easy, because the strength is increased by the reinforcing frame even in the case of using a thin polymer electrolyte membrane that is inferior in strength while it has excellent power generation efficiency. Further, the deterioration of the polymer electrolyte membrane resulted from the thermosetting resin that is considered to be a problem in the conventional membrane electrolyte assembly can be also suppressed with the protective layer. Furthermore, the assembly is easy to be built up because the number of components is small, and the possibility of poor assembly is less. Therefore, the present invention is extremely effective industrially as one that relates to a solid polymer electrolyte fuel cell that is expected to be turned into practical use in the future.

### BRIEF DESCRIPTION OF THE DRAWINGS

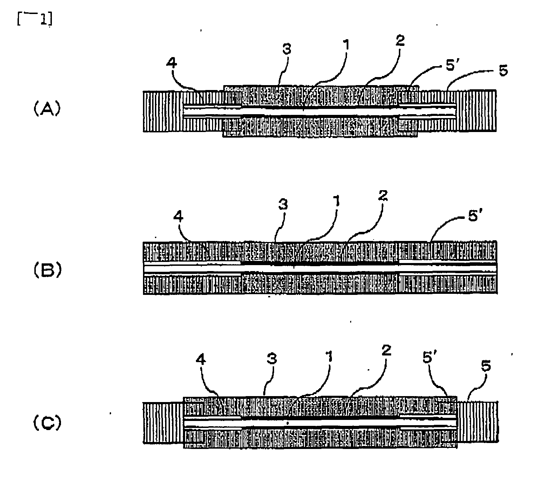

FIG. 1 is a diagram showing a cross-section of the membrane electrode assembly in the present invention. In the figure, 1 represents a polymer electrolyte membrane; 2 represents an electrode layer; 3 represents a gas diffusing layer; 4 represents a protective layer; and 5 represents a reinforcing frame. Further, 5' is a gas diffusing layer in which the thermosetting resin is intruded and set, and is one part of the reinforcing layer.

### BEST MODE FOR CARRYING OUT THE INVENTION

The membrane electrode assembly for a solid polymer electrolyte fuel cell of the present invention is characterized in:
comprising a polymer electrolyte membrane, a fuel electrode layer and an air electrode layer located respectively on each surface of the membrane, and a fuel electrode diffusing layer and an air electrode diffusing layer located respectively on the fuel electrode layer and the air electrode layer;
wherein an area of a planer section of the polymer electrolyte membrane is slightly larger than areas of planer sections of the fuel electrode layer and the air electrode layer;
a reinforcing frame formed of a thermosetting resin is located on a part of the polymer electrolyte membrane where the fuel electrode layer or the air electrode layer is not formed on one side or both sides thereof; and
a protective later exists in at least a part between the polymer electrolyte membrane and the reinforcing frame.

The polymer electrolyte membrane used in the present invention may be one generally used in a solid polymer electrolyte fuel cell. For example, a perfluoro-based electrolyte, a hydrocarbon-based electrolyte, and the like, can be preferably used, and a perfluoro-based electrolyte membrane is particularly preferable. A sulfonate-based electrolyte membrane such as Nafion (registered trademark) manufactured by Du Pont K. K. and GORE-SELECT (registered trademark) manufactured by Japan Gore-Tex Inc. (JGI) can be used as the perfluoro-based electrolyte membrane. Especially, a perfluorosulfonate resin-based electrolyte membrane reinforced with stretched porous polytetrafluoroethylene, such as GORE-SELECT (registered trademark) manufactured by Japan Gore-Tex Inc. (JGI), is preferable. The thinner the thickness of the polymer electrolyte membrane is, the better the power generation efficiency is; however, it becomes inferior in strength in compensation. However, if the membrane is reinforced with expanded porous polytetrafluoroethylene, the membrane has excellent strength. Further, the thickness of the polymer electrolyte membrane is generally about 10 to 30 µm, considering the power generation efficiency and the strength.

As the catalyst electrode layer, generally used layer in a solid polymer electrolyte fuel cell can be used. For example, one that is produced from an ink in which a conductive carbon fine particle such as carbon black in which fine particles of platinum or an alloy of platinum and other metals are supported on the surface and a polymer solution such as a perfluorosulfonate resin solution are mixed homogenously in an appropriate solvent, can be used. The metals that make an alloy with platinum include Ru, Rh, Mo, Cr, Co, and Fe, and the like. The average particle size of fine particles that are a catalyst component is preferably about 10 nm or less, and the average particle size of the conductive carbon fine particles is preferably about 20 to 100 nm. As the solvent of the above-described ink, ethanol and the like can be used.

The amount of platinum in the fuel electrode layer is desirably about 0.03 to 0.5 mg/cm² in terms of the metal platinum, and the amount of platinum in the air electrode layer is desirably about 0.1 to 0.8 mg/cm² in terms of the metal platinum. The thickness of the fuel electrode layer and the air electrode layer (hereinafter, there is a case that these are collectively referred to as "electrode layer") can be made to be, for example, about 3 to 30 µm.

On the top of the fuel electrode and the air electrode, there are a fuel electrode diffusing layer and an air electrode diffusing layer (hereinafter, there is a case that these are collectively referred to as "gas diffusing layers") respectively. These gas diffusing layers diffuse fuel gas or oxidant gas into the electrode layer, and at the same time, have a role of draining the produced water to a separator flow passage as well. The material of this gas diffusing layer is necessarily one having at least gas permeability and conductivity. As such material, a woven fabric constituted with a carbon material, a non-woven fabric such as a felt obtained by entangling carbon fibers, papers such as a carbon paper, and the like, are widely used. The thickness of the gas diffusing layer is not particularly limited. However, since there is a necessity of sufficiently diffusing the gas, the thickness is made to be, for example, 100 to 500 µm. Further, a water repellent treatment may be carried out on the gas diffusing layer with a fluorine resin and the like, if necessity.

The area of the planer section of the polymer electrolyte membrane needs to be slightly larger than the areas of planer sections of the fuel electrode layer and the air electrode layer. This is because, in the present invention, the strength is increased by reinforcing the periphery of the polymer electrolyte membrane without forming the electrode layer on both entire surfaces of the polymer electrolyte membrane. Further, the area of the polymer electrolyte membrane side in the planer section of the gas diffusing layer needs to be slightly smaller than the area of the planer section of the polymer electrolyte membrane. That is, the area of the planer section of the polymer electrolyte membrane must be slightly larger than the surface part area of the polymer electrolyte membrane side of the gas diffusing layer. This is because if a part of the surface of the polymer electrolyte membrane side of the gas diffusing layer is exposed from the polymer electrolyte membrane, the fuel gas and the oxidant gas are mixed from the exposed part as a matter of course. Herein, the planer section of the polymer electrolyte membrane being slightly larger than the areas of the planer sections of the fuel electrode layer and the air electrode layer specifically means that the area of the planer section of the electrode layer is smaller than the area of the planer section of the polymer electrolyte membrane and that the electrode layer is located on each surface of the polymer electrolyte membrane in a way that the periphery of the electrode layer is not in contact with the periphery of the polymer electrolyte membrane. This definition is the same for the surface of the polymer electrolyte membrane side of the gas diffusing layer.

In the membrane electrode assembly in the present invention, a reinforcing frame made of a thermosetting resin is located on a part where the fuel electrode layer or the air electrode layer is not formed on one surface or both surfaces of the polymer electrolyte membrane. The reinforcing frame has a role of reinforcing the polymer electrolyte membrane, and at the same time, has a gas sealing action of preventing leaking of the fuel gas and the oxidant gas to the outside. Therefore, the reinforcing frame needs to be at least in a condition of closely adhering with the peripheral surface of the gas diffusing layer, and preferably has a structure in which the thermosetting resin constituting the reinforcing frame is intruded and hardened on the periphery of the gas diffusing layer having a porous structure. The structure exhibits higher gas sealing property.

A type of the thermosetting resin constituting the reinforcing frame in the present invention is not particularly limited. Examples can include an epoxy resin, a melamine resin, a phenol resin, and an unsaturated polyester resin. Further, the reinforcing frame is preferably one reinforced with fibers. This is because the strength is higher. A woven fabric or a non-woven fabric of organic fibers or glass fibers can be used here. The thickness of the reinforcing frame may be determined by considering the thickness of the electrode layer, the diffusing layer, and the protective layer described later.

The reinforcing frame may be one in which the thermosetting resin is intruded and hardened in the gas diffusing layer. That is, in the membrane electrode assembly, normally, the areas of the planer sections of an electrode layer 2 and a gas diffusing layer 3 is made to be slightly smaller than the area of the planer section of a polymer electrolyte membrane 1, and a reinforcing frame 5 is located on a part where the electrode layer 2 is not formed (refer to FIG. 1(A)). However, as in FIG. 1(B), the areas of the planer sections of the polymer electrolyte membrane 1 and the gas diffusing layer 3 is made to be the same, both are layered, the thermosetting resin is intruded and hardened at least on the surface side of the polymer electrolyte membrane side, and the relevant part 5' may be made to be a reinforcing frame. Further, for making the areas of the planer sections of the polymer electrolyte membrane 1 and the gas diffusing layer 3 to be the same, layering both, and locating reinforcing frame 5 on the outside of the layered body, the thermosetting resin may be intruded and hardened at least on the surface side of the polymer electrolyte membrane side in the periphery of the gas diffusing layer (refer to FIG. 1 (C)) . In this case, the part where the thermosetting resin is intruded and hardened in the gas diffusing layer is the reinforcing frame 5'.

It is preferable to smoothing-treat at least the outside of the planar section of the reinforcing frame. Particularly, the thermosetting resin sheet reinforced with fiber is not necessarily flat. Therefore, it becomes difficult to closely adhere with a gasket when assembling a fuel cell. Then, by performing the smoothing treatment, adhesiveness of the reinforcing frame and the gasket can be increased.

In the membrane electrode assembly of the present invention, a protective layer exists in at least one part between the polymer electrolyte membrane and the reinforcing frame. This protective layer has a role of preventing contact of the polymer electrolyte membrane and the reinforcing frame, and has an action of suppressing deterioration of the polymer electrolyte membrane caused by a main agent as the thermosetting resin component and a hardening agent under a high temperature to harden the thermosetting resin constituting the reinforcing frame. Further, there is a case that a reinforcing frame thermally hardened in advance is used. In that case, the protective layer can exhibit also an action of decreasing damages that may be given to the polymer electrolyte membrane by the unevenness of the surface of the reinforcing frame and the edge part of the reinforcing frame due to the direct contact of the reinforcing frame and the polymer electrolyte membrane. Additionally, the protective layer has an action of decreasing damages of the reinforcing frame by preventing contact of the strongly acidic polymer electrolyte membrane to the reinforcing frame. That is, "protective" in the protective, layer has two meanings such as protection of the polymer electrolyte membrane and protection of the reinforcing frame. Furthermore, the protective layer also has an action and effect of enhancing adhesiveness of the reinforcing frame with the electrolyte membrane and improving the gas sealing property. Further, durability of the fuel cell can be improved against a high temperature of about 70 to 100°C that is the atmosphere of operation of the cell and high humidity of 100% RH by constituting the protective layer with a material having high resistance.

When the above-described actions are considered, the protective layer has to exist in a frame form surrounding the electrode layer and the diffusing layer at the exposed part of the electrolyte membrane so that the reinforcing frame and the polymer electrolyte membrane are not in contact with each other. The protective layer is preferably located at all parts between the reinforcing frame and the polymer electrolyte membrane.

A type of the resin constituting the protective layer is not particularly limited as long as it has excellent heat and water resistance and acid resistance at a high temperature such as from 120°C to 200°C. For example, a thermoplastic resin such as polyester such as polyethylene terephthalate; polyolefin such as polypropylene; a fluorine resin such as polytetrafluoroethylene, a perfluoroalkoxy fluorine resin and polyvinylidene fluoride; polyether sulfone; polyether ether ketone; and polysulfone can be used.

The protective layer is good if it has a sufficient thickness to prevent a reaction of the reinforcing frame with the electrolyte membrane. However, the thickness can be, for example, 5 to 50 µm, and more preferably 20 µm or less.

Hereinbelow, an example of a producing method of the membrane electrode assembly of the present invention will be explained. However, the producing method is not limited thereto. Further, numbers below represent numbers in FIG. 1.

First, a fuel electrode layer and an air electrode layer (an electrode layer 2) are formed on both surfaces of a polymer electrolyte membrane 1. As a general method, slurries are prepared in which carbon supporting a noble metal catalyst such as Pt-Ru for the fuel electrode layer or carbon supporting a noble metal catalyst such as Pt for the air electrode layer is added into a mixture of a polymer solution for the polymer electrolyte membrane such as a perfluorosulfonate resin solution, a polytetrafluoroethylene dispersion liquid, and the like. These slurries are applied onto the polymer electrolyte membrane with a coating method, a spraying method, a transferring method, and the like, dried, and made into a three-layer body. At this time, the electrode to be formed has to be made slightly smaller than the polymer electrolyte membrane.

Next, a protective layer 4 is formed in the peripheral part of the formed electrode, that is, on a part where the fuel electrode layer and the air electrode layer are not formed in the polymer electrode membrane. In the case of forming the reinforcing frame on both surfaces, the protective layer has to be formed also on both surfaces. However, in the case of forming the reinforcing frame only on one surface, it is enough to form the protective layer only on one surface also. A specific forming method of the protective layer is not particularly limited. For example, a film of the above-explained thermoplastic resin is molded to a shape of the exposed part of the electrolyte membrane, and this may be compressed or thermally compressed. Alternatively, the exposed part of the electrolyte membrane is coated with a melted thermoplastic resin or a solution thereof, and then it may be cooled and hardened or dried.

Moreover, the protective layer may be formed on the three-layer body formed of the polymer electrolyte membrane and the electrode layers as described above. The protective layer may be formed on the exposed part of the electrolyte membrane of a five-layer body in which a gas diffusing layer is further formed.

The fuel electrode diffusing layer and the air electrode diffusing layer (gas diffusing layers 3) are formed on the electrode layer of the three-layer body formed of the polymer electrolyte membrane 1 and the electrode layers 2 or of the three-layer body on which the protective layer is formed to be a five-layer body. Specifically, for example, it is enough to attach with an adhesive or thermally compress a fabric or a paper formed of porous carbon.

Moreover, the gas diffusing layer is formed after forming the electrode layer in the above-described producing method. However, the electrode layer and the gas diffusing layer are unified with thermocompression and the like in advance, and this may be adhered or thermally compressed to the polymer electrolyte membrane.

Then, a reinforcing frame 5 made of a thermosetting resin is located on the protective layer 4 in the obtained five-layer body, that is, on the exposed part of the polymer electrolyte membrane. The method is not particularly limited. However, a thermosetting resin sheet in a frame form that is molded to a shape of the exposed part of the polymer electrolyte membrane may be adhered onto the protective layer, and in the case of coating the entire exposed part of the polymer electrolyte membrane with the protective layer, the thermoplastic resin is applied onto the protective layer, and then may be dried.

Alternatively, a method in which an epoxy sheet of B stage is layered on the protective layer that is the exposed part of the polymer electrolyte membrane, it is placed in a mold and thermally hardened, the mold is released, and then it is made into a prescribed size with die cutting; a method in which the five-layer body is set in a mold, a liquid epoxy resin is injected, it is thermally hardened, the mold is released, and then it is made into a prescribed size with die cutting; and the like; can be considered.

Further, the objective membrane electrode assembly can be obtained by unifying the fuel electrode diffusing layer or the air electrode diffusing layer and the reinforcing frame in advance, and then thermally compressing the unified body to the polymer electrolyte membrane 1 in which the electrode layer 2 with the protective layer 4 placed on its periphery is formed.

The membrane electrode assembly of the present invention constitutes a cell stacked together with a gasket, a separator, and the like, and can be used as a solid polymer electrolyte fuel cell.

Since the exposed part of the polymer electrolyte membrane, that is, the part where the fuel electrode layer and the air electrode layer are not formed, of the membrane electrode assembly of the present invention produced with the above-described method is coated with the protective layer that has excellent adhesiveness and the reinforcing frame that has excellent strength, the membrane electrode assembly has excellent strength and gas sealing property. Further, the assembly is easy to be built up, since the number of components is small. Then, the deterioration of the electrolyte membrane that has been generated in the conventional membrane electrode assembly in which the polymer electrolyte and the gas sealing member or the reinforcing member formed of a thermosetting resin are directly contacted cannot occur in the membrane electrode assembly of the present invention having the protective layer. Therefore, the membrane electrode assembly of the present invention has an extremely high utility value as a configuration element of a high quality solid polymer electrolyte fuel cell.

### EXAMPLES

Hereinbelow, the present invention will be explained specifically in reference to examples. However, the present invention is not limited by the examples described below, and as a matter of course, it is possible to carry out by appropriately adding changes in the range that can be adapted to the above and below described purposes, and any of these are included in the technical range of the present invention.

### Example 1

On both surfaces of the commercially available membrane electrode assembly (PRIMEA5510, manufactured by Japan Gore-Tex Inc.), a polyethylene naphthalate films with 25 µm thickness were compressed on the exposed part of the electrolyte membrane peripheral of the electrode layers, and were made to be a protective layer. Moreover, the size of the electrolyte membrane was 80 x 80 mm, and the electrode layers of 50 x 50 mm were located on the center of both of its surfaces. After compressing the protective layers, diffusing layers (Carbel-CNW10A, manufactured by Japan Gore-Tex Inc.) of 52 x 52 mm were thermally compressed on the electrode layer.

Separately, a commercially available B stage glass epoxy sheets (GEPL-170, manufactured by Mitsubishi Gas Chemicals Co., Ltd.) were processed into a size of 100 x 100 mm, and an opening part of 52 x 52 mm was provided on its center using a blade.

The glass epoxy sheets were located on both surfaces of the membrane electrode assembly in which the protective layers were compressed, they were thermally compressed at 160°C at 30 kgf/cm² (about 2.9 MPa) for 5 minutes to be unified. The assembly was further heated in an oven set at 160°C for one hour, and the epoxy resin is thermally hardened completely.

The obtained membrane electrode assembly was punched into 80 x 80 mm with a blade. The electrolyte membrane, the protective layers, and the reinforcing frames were observed, and no discoloring caused by the deterioration of the component was observed at all.

### Comparative Example 1

A membrane electrode assembly was obtained in a similar manner to the above-described Example 1, except the polyethylene naphthalate films as protective layers were not used. When the cross-sectional surface is observed, the polymer electrolyte membrane was discolored to dark brown. This seems to be because the electrolyte membrane was deteriorated by the reaction of the electrolyte membrane and the epoxy resin sheet by being kept at a high temperature of 160°C, both of which were directly contacted with each other in Comparative Example 1.

## Claims

1. A membrane electrode assembly for a solid polymer electrolyte fuel cell,
comprising a polymer electrolyte membrane, a fuel electrode layer and an air electrode layer located respectively on each surface of the membrane, and a fuel electrode diffusing layer and an air electrode diffusing layer located respectively on the fuel electrode layer and the air electrode layer;
wherein an area of a planer section of the polymer electrolyte membrane is slightly larger than areas of planer sections of the fuel electrode layer and the air electrode layer;
a reinforcing frame formed of a thermosetting resin is located on a part of the polymer electrolyte membrane where the fuel electrode layer or the air electrode layer is not formed on one side or both sides thereof; and
a protective layer exists in at least a part between the polymer electrolyte membrane and the reinforcing frame.

2. The membrane electrode assembly for a solid polymer electrolyte fuel cell according to claim 1, wherein the reinforcing frame is fiber-reinforced.

3. The membrane electrode assembly according to claims 1 or 2, wherein the thermosetting resin configuring the reinforcing frame is intruded and hardened in at least one part of a periphery of the fuel electrode diffusing layer and/or the air electrode diffusing layer.

4. The membrane electrode assembly according to any one of claims 1 to 3, wherein at least the outside of a planer section of the reinforcing frame is smoothing-treated.

5. A solid polymer electrolyte fuel cell having the membrane electrode assembly according to any one of claims 1 to 4.

## Patentansprüche

1. Membranelektrodenzusammenbau für eine Festpolymer-Elektrolyt-Brennstoffbatterie,
umfassend eine Polymerelektrolytmembran, eine Brennstoffelektrodenschicht und eine Luftelektrodenschicht, die sich jeweils auf jeder Oberfläche der Membran befinden, und eine Brennstoffelektrodendiffusionsschicht und eine Luftelektrodendiffusionsschicht, die sich jeweils auf der Brennstoffelektrodeschicht und der Luftelektrodenschicht befinden;
wobei ein Bereich eines planaren Abschnitts der Polymerelektrolytmembran etwas größer ist als Bereiche planarer Abschnitte der Brennstoffelektrodenschicht und der Luftelektrodenschicht;
ein Verstärkungsrahmen, der aus einem Duroplastharz gebildet ist, sich auf einem Teil der Polymerelektrolytmembran befindet, wo die Brennstoffelektrodenschicht oder die Luftelektrodenschicht auf einer Seite oder beiden Seiten davon nicht gebildet ist; und
eine Schutzschicht in mindestens einem Teil zwischen der Polymerelektrolytmembran und dem Verstärkungsrahmen vorliegt.

2. Membranelektrodenzusammenbau für eine Festpolymer-Elektrolyt-Brennstoffbatterie nach Anspruch 1, wobei der Verstärkungsrahmen faserverstärkt ist.

3. Membranelektrodenzusammenbau nach Anspruch 1 oder 2, wobei das Duroplastharz, das den Verstärkungsrahmen bildet, in mindestens einen Teil einer Peripherie der Brennstoffelektroden-Diffusionssschicht und/oder der LuftelektrodenDiffusionsschicht eingeführt wird und in diesem gehärtet wird.

4. Membranelektrodenzusammenbau nach einem der Ansprüche 1 bis 3, wobei mindestens die Außenseite eines planareren Abschnitts des Verstärkungsrahmens zum Glätten behandelt wird.

5. Festpolymer-Elektrolyt-Brennstoffzelle, die den Membranelektrodenzusammenbau nach einem der Ansprüche 1 bis 4 aufweist.

## Revendications

1. Ensemble membrane électrodes pour une pile à combustible à électrolyte polymère solide,
comprenant une membrane électrolyte polymère, une couche d'électrode à combustible et une couche d'électrode à air se trouvant respectivement sur chaque surface de la membrane, et une couche de diffusion de l'électrode à combustible et une couche de diffusion de l'électrode à air se trouvant respectivement sur la couche d'électrode à combustible et la couche d'électrode à air;
dans lequel une zone d'une section plus plane de la membrane électrolyte polymère est légèrement plus grande que les zones des sections plus planes de la couche d'électrode à combustible et de la couche d'électrode à air;
un cadre renforçant formé d'une résine thermodurcissable se trouve sur une partie de la membrane électrolyte polymère là où la couche d'électrode à combustible ou la couche d'électrode à air n'est pas formée sur un côté ou les deux côtés de celle-ci; et
une couche protectrice existe dans au moins une partie entre la membrane électrolyte polymère et le cadre renforçant.

2. Ensemble membrane électrodes pour une pile à combustible à électrolyte polymère solide selon la revendication 1, dans lequel le cadre renforçant est renforcé par des fibres.

3. Ensemble membrane électrodes selon les revendications 1 ou 2, dans lequel la résine thermodurcissable configurant le cadre renforçant est introduite et durcie dans au moins une partie d'une périphérie de la couche de diffusion de l'électrode à combustible et/ou de la couche de diffusion de l'électrode à air.

4. Ensemble membrane électrodes selon l'une quelconque des revendications 1 à 3, dans lequel au moins l'extérieur d'une section plus plane du cadre renforçant est rendue lisse par traitement.

5. Pile à combustible à électrolyte polymère solide ayant l'ensemble membrane électrodes selon l'une quelconque des revendications 1 à 4.
